# EUROPÄISCHE PATENTSCHRIFT

(11) **EP 1 320 662 B1**
(45) Veröffentlichungstag und Bekanntmachung des Hinweises auf die Patenterteilung: **30.11.2005**
(21) Anmeldenummer: 01967611.3
(22) Anmeldetag: 24.09.2001
(51) Int. Cl.: F01D 5/22, F01D 5/20, F01D 11/08, F16J 15/447

(54) **DICHTUNGSANORDNUNG**
SEAL SYSTEM
SYSTEME DE GARNITURE D'ETANCHEITE

(30) Priorität: 25.09.2000 DE 10047307
(43) Veröffentlichungstag der Anmeldung: 25.06.2003
(73) Patentinhaber: Alstom Technology Ltd, 5400 Baden (CH)
(72) Erfinder: BEECK, Alexander, Dr., Orlando, FL 32828 (US); BENEDETTI, Bruno, CH-5722 Gränichen (CH); KIENINGER, Andreas, CH-5415 Nussbaumen (CH); RATHMANN, Ulrich, CH-5400 Baden (CH)
(86) Internationale Anmeldenummer: PCT/IB2001/001750
(87) Internationale Veröffentlichungsnummer: WO 2002/025065

(56) Entgegenhaltungen:
- EP-A- 0 292 250
- EP-A- 0 666 407
- SU-A- 792 014
- US-A- 3 185 441
- US-A- 3 339 933
- US-A- 3 537 713
- US-A- 3 545 882
- US-A- 4 274 806
- US-A- 4 957 411
- US-A- 5 756 217

## Beschreibung

### Technisches Anwendungsgebiet

Die vorliegende Erfindung betrifft eine Laufschaufeleiner Strömungsmaschine gemäss dem Oberbegriff des Anspruchs 1.

### Stand der Technik

Der Wirkungsgrad einer axial durchströmten Gasturbine wird unter anderem durch Leckströme des komprimierten Gases beeinflusst, die zwischen rotierenden und nicht rotierenden Komponenten der Turbine auftreten. Einen Einfluss auf die Größe der Leckströme hat hierbei der zwischen den Enden der Laufschaufeln und der die Laufschaufeln umgebenden Gehäusewand auftretende Spalt. Durch Verkleinerung bzw. Abdichtung dieses Spaltes kann der Wirkungsgrad der Gasturbine erhöht werden. Aufgrund der beim Betrieb der Turbine auftretenden Kräfte sowie der thermischen Belastung kann der Spalt jedoch nicht beliebig klein gewählt werden. Zur Verminderung der Leckströme in diesen Bereichen sind unterschiedliche Dichtungsmechanismen bekannt.

So beschreibt die DE 198 48 103 A1 eine Dichtungsanordnung zur Reduzierung von Leckströmen innerhalb einer Strömungsrotationsmaschine, bei der zwischen Leit- und/oder Laufschaufeln und benachbarten Komponenten der Strömungsmaschine ein filzartiges Material als Dichtelement vorgesehen ist, das die axialen Spaltströmungen des Heissgases reduziert.

Eine häufig eingesetzte Technik zur Verminderung der Leckströme in axialen Rotationsmaschinen ist in der DE 198 21 365 A1 beschrieben. Bei dieser Technik werden Dichtstellen zwischen dem Gehäuse und dem Rotor als so genannte Labyrinthdichtungen ausgeführt. Bei diesen Labyrinthdichtungen sind am Rotor bzw. den mit dem Rotor verbundenen Laufschaufeln ein oder mehrere schneidenförmige Elemente ausgebildet, die während der Rotation in Gegenlaufflächen an der Gehäusewandung eingreifen. Als besonders vorteilhaft hat sich hierbei die Ausbildung der Gegenlaufflächen in Form von Wabendichtungen, so genannten Honey-Comb-Dichtungen, herausgestellt.
Eine als Labyrinthdichtung ausgeführte Dichtungsanordnung mit derartigen in Wabenstruktur ausgebildeten Gegenlaufflächen bei einer Gasturbine ist auch in der US 5, 967, 745 näher erläutert.

Beim erstmaligen Betrieb einer Gasturbine mit einer derartigen Dichtungsanordnung muss durch die schneidenförmigen Elemente an den Laufschaufeln jedoch zunächst Material aus der Gegenlauffläche abgetragen werden, um die ineinander greifende Struktur zur Erzielung der Dichtungswirkung zu erzeugen. Auch während des Betriebes kommt die Gegenlauffläche aufgrund der bei unterschiedlichen Belastungen auftretenden unterschiedlichen Kräfte und thermischen Deformationen häufig mit den schneidenförmigen Elementen in Kontakt. Hierbei muss sichergestellt sein, dass sich die schneidenförmigen Elemente der Laufschaufeln nicht verstärkt abnutzen.
Daher wird einerseits versucht, diese Abnutzung durch die Wahl eines gegenüber der Gegenlauffläche deutlich härteren Materials für die schneidenförmigen Elemente der Laufschaufeln zu vermindern. Andererseits ist beispielsweise aus der US 5,952,110 bekannt, die schneidenförmigen Elemente mit einer abrasiven Beschichtung zu versehen, bei der abrasive Teilchen aus der Oberfläche des schneidenförmigen Elementes hervorstehen. Durch diese abrasiven Partikel wird die Gegenlauffläche in dem entsprechenden Bereich abgeschliffen.

Das schneidenförmige Element, das in der Regel durch das Deckband oder den Schaufelfuß der Laufschaufeln gebildet wird oder auf diesen aufsitzt, greift bei den obigen Anordnungen in die Gegenlauffläche ein, um die dichtende Wirkung zu erzielen. Durch axiale und radiale Dehnungen während des Betriebs der Strömungsmaschine arbeitet sich die Gegenlauffläche sowohl in radialer wie auch in axialer Richtung ab, wobei die schneidenförmigen Elemente des Deckbandes oder des Schaufelfußes der Laufschaufeln keine Abnutzung erfahren sollten, um die Balance des Rotors nicht zu stören.
Bei längerer Betriebsweise von Gasturbinenanlagen mit derartigen Dichtungsanordnungen wurde jedoch festgestellt, dass sich die Richtung der Abnutzung bei ungünstigen Temperaturverhältnissen oder bestimmten Umfangsgeschwindigkeiten im Betrieb umkehren kann, so dass sich der rotierende Teil abnutzt, während die Gegenlauffläche, insbesondere bei Wabenstrukturen, annähernd unversehrt bleibt.

Aus der US 4,957,411 ist eine Laufschaufel für einen Verdichter bekannt geworden, deren Spitze derartgegen die Einbau-Umfangsrichtung geneigt ist, dass sie ein spanabhebendes Element ausbildet mit einer Spanfläche und einer Freiformfläche. Auf diese Weise kann sich die Spitze der Laufschaufel im Betrieb in eine Gegenlauffläche einschneiden.

Die Aufgabe der vorliegenden Erfindung besteht darin, eine verbesserte Dichtungsanordnung zu schaffen, bei der die Abnutzung der rotierenden Baugruppen, insbesondere der schneidenförmigen Elemente dieser Baugruppen, auch bei ungünstigen Umdrehungs- und Temperaturverhältnissen deutlich vermindert ist.

### Wege zur Ausführung der Erfindung

Die Aufgabe wird mit der Laufschaufel gemäß Patentanspruch 1 gelöst. Vorteilhafte Ausgestaltungen und Vorwendungen der Laufschaufel sind Gegenstand der Unteransprüche.

Eine Dichtungsanordnung unter Verwendung des angegebenen Laufschaufel ist zwischen einer um eine Rotationsachse rotierenden Baugruppe und einer statischen Baugruppe einer Strömungsmaschine ausgebildet. Bei der Dichtungsanordnung greifen ein oder mehrere schneidenförmige Elemente an der rotierenden Baugruppe in eine Gegenlauffläche an der statischen Baugruppe ein, wie dies aus dem Stand der Technik bekannt ist. Die vorliegende Dichtungsanordnung zeichnet sich dadurch aus, dass zumindest eines der schneidenförmigen Elemente gegenüber der Gegenlauffläche als spanabhebendes Mittel mit geometrisch bestimmter Schneide ausgebildet ist oder sich bei Rotation der rotierenden Baugruppe zu einem ein derartigen Mittel ausbildet.

Die Dichtungsanordnung wird zur Abdichtung zwischen den Laufschaufeln und dem benachbarten Gehäuse eingesetzt. Die Deckbänder der Laufschaufeln sind hierbei als Schneiden ausgebildet, die gegenüber der bekannten Ausführung dieser Schneiden an ihrer Oberseite entgegen der Rotationsrichtung abgeschrägt sind, so dass sie eine Spanfläche und eine Freiformfläche gegenüber der Gegenlauffläche aufweisen. Auf diese Weise entsteht aufgrund der Aneinanderreihung dieser Deckbänder in Umfangsrichtung ein Sägezahnprofil, das die spanabhebende Wirkung an der Gegenlauffläche bewirkt.
Da diese Abschrägung der schneidenförmigen Elemente der Deckbänder einen keilförmigen Spalt zwischen dem jeweiligen Deckband und der Gegenlauffläche und damit eine Erhöhung von Leckströmen zur Folge hat, wird in einer Ausführungsform eine Anordnung der Deckbänder realisiert, bei der diese Deckbänder hinsichtlich ihrer Befestigung an der Laufschaufel gezielt aus der Balance gebracht sind. Durch die nicht ausbalancierten Deckbänder, die nicht in ihrem Schwerpunkt sondern in Umfangsrichtung vor ihrem Schwerpunkt mit den Laufschaufeln verbunden sind, schließt sich der keilförmige Spalt aufgrund der bei der Rotation auftretenden Zentrifugalkräfte während des Betriebs der Rotationsstufe automatisch. Die spanabhebende Wirkung dieser Anordnung besteht daher nur in einem Bereich geringer Umlaufgeschwindigkeit der rotierenden Bauteile, während sich bei höheren Umlaufgeschwindigkeiten die dichtende Wirkung erhöht.
In einer Weiterbildung wird das Schließen dieser keilförmigen Spalte während des Betriebs der rotierenden Baugruppe durch thermische Deformation erreicht. Hierbei wird ausgenutzt, dass die thermische Belastung der rotierenden Baugruppe bei Gasturbinen nicht über die gesamte Laufschaufel und deren Deckband gleich ist, sondern eine bestimmte Verteilung aufweist. Durch Ausnutzung dieser ortsabhängigen thermischen Belastung kann eine gezielte Deformation der Laufschaufeln mit dem Deckband erreicht werden, bei der sich der keilförmige Spalt schließt.

Diese Deformation sowie die Ausnutzung nicht ausbalancierter Deckbänder kann auch dafür ausgenutzt werden, die spanabhebende Wirkung der schneidenförmigen Elemente erst durch die Rotation der Baugruppe zu ermöglichen. Hierbei werden die schneidenförmigen Elemente aufgebaut, wie dies bereits aus dem Stand der Technik bekannt ist. Durch gezielte Abweichung von einer ausbalancierten Anordnung der Deckbänder kann erreicht werden, dass sich die Deckbänder mit den schneidenförmigen Elementen mit ihrem in Umfangsrichtung vorderen Bereich radial nach außen biegen, so dass.hierdurch ein Freiwinkel gegenüber der Gegenlauffläche entsteht. Die gesamte Anordnung zeigt daher erst bei genügend hoher Umlaufgeschwindigkeit das gewünschte sägezahnartige Profil.

Selbstverständlich ist es zur Ausnutzung des erfindungsgemäß beabsichtigten spanabhebenden Effektes nicht erforderlich, dass sämtliche schneidenförmigen Elemente diese spanabhebende Funktion aufweisen. Vielmehr genügt es auch, wenn nur eines der Deckbänder der rotierenden Stufe ein derartiges Element aufweist.

In einer weiteren Ausführungsform können die schneidenförmigen Elemente, die als spanabhebendes Mittel mit geometrisch bestimmter Schneide ausgebildet sind, zusätzlich an ihren Schneideecken partiell gehärtet werden. Dieses partielle Härten kann durch Maßnahmen erfolgen, wie sie aus der Werkzeugtechnik bekannt sind, so beispielsweise durch das Aufbringen einer Cr- oder TiN-Schicht oder anderer Beschichtungen, die für hohe Temperaturen geeignet sind, z.B. Hardalloy-h, SiC, Al₂O₃. Das partielle Härten der Schneideecken bewirkt ein automatisches.Nachschärfen dieser Schneideecken während des Betriebes, so dass die spanabhebende Wirkung auch nach längerer Betriebszeit noch gewährleistet ist.

Die vorliegende Dichtungsanordnung eignet sich insbesondere für Strömungsmaschinen, wie beispielsweise Gasturbinen, und kann vor allem zwischen den Laufschaufelspitzen und der Gehäuseinnenwandung, zwischen den Laufschaufelfüßen und benachbarten Leitschaufeln, zwischen Wärmestausegmenten des Rotors und benachbarten Laufschaufeln oder zwischen Wärmestausegmenten und einer Gehäuseinnenwandung eingesetzt werden. Grundsätzlich sind sie für jede Form der Abdichtung zwischen einer rotierenden Baugruppe und einer statischen Baugruppe geeignet.

### Kurze Beschreibung der Zeichnungen

Die vorliegende Dichtungsanordnung wird nachfolgend anhand von Ausführungsbeispielen in Verbindung mit den Zeichnungen ohne Beschränkung des allgemeinen Erfindungsgedankens nochmals näher erläutert. Hierbei zeigen:
- Fig. 1a-c:: ein Beispiel für die Wirkungsweise und den Aufbau einer Labyrinthdichtung mit Wabenstruktur gemäß dem Stand der Technik bei Gasturbinen;
- Fig. 2a/b:: ein Beispiel für die Ausbildung der schneidenförmigen Elemente der Deckbänder einer Turbinenstufe als Bestandteil der vorliegenden Dichtungsanordnung;
- Fig. 3:: eine Ausführungsform zur Veranschaulichung der Wirkungsweise eines nicht ausbalancierten Deckbandes bei der vorliegenden Dichtungsanordnung;
- Fig. 4:: ein Beispiel für eine Ausgestaltung des schneidenförmigen Elementes eines Deckbandes, das erst bei Rotation der Baugruppe die spanabhebende Wirkung entfaltet ;
- Fig. 5a-e:: mehrere Beispiele für auf das Deckband aufgesetzte oder integrierte Schneiden zur Realisierung der vorliegenden Dichtungsanordnung ;
- Fig. 6:: ein Beispiel für die Kombination eines nicht ausbalancierten Deckbandes mit einer in das Deckband integrierten Schneide;
- Fig. 7:: ein weiteres Beispiel für die Ausbildung der geometrisch bestimmten Schneide im Deckband einer Laufschaufel;
- Fig. 8:: schematisch eine Darstellung der partiell gehärteten Bereiche einer Schneide zum Einsatz in der vorliegenden Dichtungsanordnung; und
- Fig. 9:: ein Beispiel für unterschiedliche Bereiche innerhalb einer Gasturbine in denen die vorliegende Dichtungsanordnung eingesetzt werden kann.

### Wege zur Ausführung der Erfindung

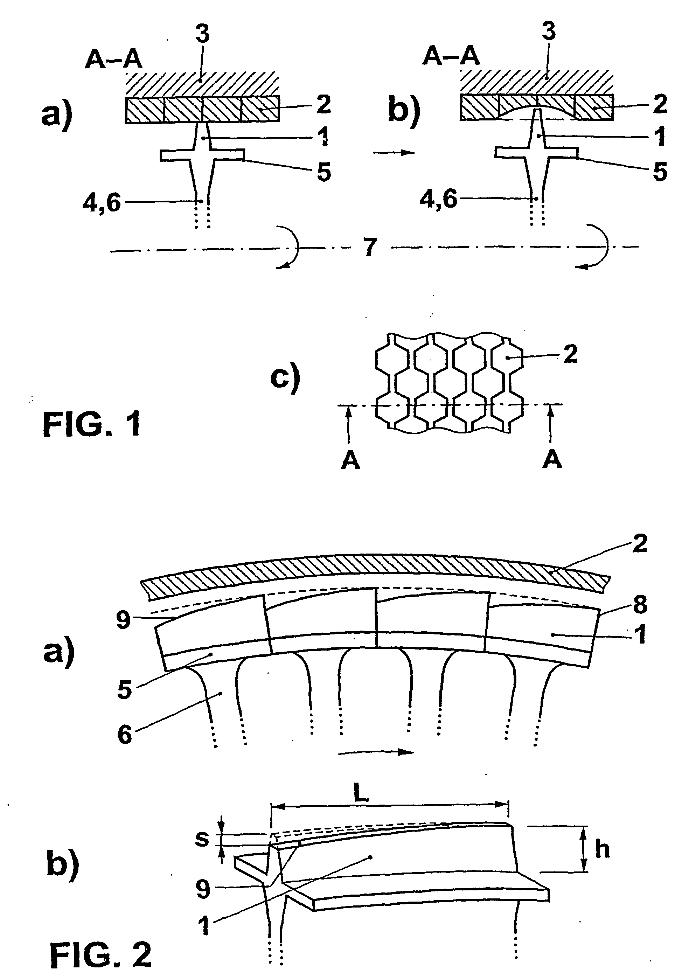

Figur 1a zeigt ein Beispiel für den Aufbau einer Dichtungsanordnung in einer Turbinenstufe einer Gasturbine. Die dargestellte Dichtungsanordnung wird durch eine Gegenlauffläche 2 in Wabenstrukturform als Beispiel auf dem statischen Bauteil 3, hier der Gehäusewandung, und einem schneidenförmigen Element 1 am Deckband 5 einer rotierenden Laufschaufel 6 gebildet. Die Drehrichtung der Laufschaufel 6 um die Rotations- bzw. Rotorachse 7 ist mit einem Pfeil angedeutet. In Figur 1b ist die einschneidende Wirkung des schneidenförmigen Elementes 1 in die Gegenlauffläche 2 veranschaulicht. Durch axiale sowie radiale Dehnungen der Laufschaufel 6 während des Betriebes der Gasturbine arbeitet sich die Gegenlauffläche 2 sowohl in axialer wie auch in radialer Richtung ab.
In Figur 1c ist ein Beispiel für den Aufbau einer zur Bildung der Gegenlauffläche eingesetzten Wabenstruktur in Draufsicht zu erkennen.

Das schneidenförmige Element 1 stellt bei dieser bekannten Dichtungsanordnung das abrasive Element dar, während das Material der Gegenlauffläche 2 das abzutragende Material darstellt. Zur Vermeidung eines diese Wirkungsweise umkehrenden Mechanismus, der bei ungünstigen Umdrehungsgeschwindigkeiten und Temperaturverhältnissen auftreten kann, wird die erfindungsgemäße Dichtungsanordnung vorgeschlagen, die nachfolgend anhand von mehreren Ausführungsbeispielen in Verbindung mit den Figuren 2 bis 9 erläutert wird.
Diese Ausführungsbeispiele beziehen sich jeweils auf eine besondere Ausbildung des schneidenförmigen Elementes eines Deckbandes einer Laufschaufel. Selbstverständlich lassen sich die geometrischen Ausführungen dieses schneidenförmigen Elementes ebenso auf andere Teile rotierender Baugruppen übertragen. Weiterhin sind auch mehrere hintereinander geschaltete Schneiden oder schneidenförmige Elemente möglich.

Figur 2a zeigt einen Ausschnitt aus einer Laufschaufelreihe einer Gasturbine, bei der das Deckband 5 an der radialen Spitze der Laufschaufeln 6 als schneidenförmiges Element 1 ausgebildet ist. Die Deckbänder können hierbei im axialen Schnitt eine Form aufweisen, wie sie im Zusammenhang mit Figur.1 beispielhaft dargestellt ist. Die Rotationsrichtung ist wiederum durch den Pfeil angedeutet. Bei dieser beispielhaften Ausgestaltung der vorliegenden Dichtungsanordnung ist die Gegenlauffläche 2 als Wabenstruktur ausgebildet. Die schneidenförmigen Elemente 1 der Deckbänder 5 der Laufschaufeln sind in diesem Beispiel jeweils an ihrer Oberseite abgeschrägt, so dass sie eine Spanfläche 8 sowie eine Freifläche 9 gegenüber der Gegenlauffläche 2 bilden. Der schraffierte Bereich zeigt hierbei die gegenüber der üblichen Ausbildung derartiger Elemente geänderte Form auf. Die Gegenlauffläche 2 ist in dieser Abbildung nur zur übersichtlicheren Darstellung von den schneidenförmigen Elementen 1 beabstandet dargestellt.
Durch diese Ausbildung der schneidenförmigen Elemente als spanabhebendes Mittel mit geometrisch bestimmter Schneide wird während der Rotation der Laufschaufeln eine spanabhebende Wirkung erzielt, die eine deutlich verminderte Abnutzung auch bei ungünstigen Umdrehungsgeschwindigkeiten und Temperaturverhältnissen ermöglicht.

Die Ausgestaltung der schneidenförmigen Elemente zur Erzielung dieser Zerspanungsgeometrie ist in Figur 2b nochmals anhand eines der schneidenförmigen Elemente in perspektivischer Ansicht dargestellt. Die gestrichelte Linie gibt hierbei die Abschrägung gegenüber einem aus dem Stand der Technik bekannten herkömmlichen derartigen Element an. Bei einer üblichen Höhe h und Länge L dieses schneidenförmigen Elementes, wie sie bei bekannten Gasturbinenanordnungen in der ersten Turbinenstufe vorliegen, erfüllt das Maß bzw. die Höhendifferenz s der Abschrägung, wie sie in der Figur dargestellt ist, vorzugsweise die Bedingung: 0,01 h ≤ s ≤ 5 0,5 h. In der Regel führt dies zu einer Höhendifferenz s im Bereich von 0,1 bis 10 mm. Eine derartige Geometrie des schneidenförmigen Elementes wird bereits bei der Herstellung der Turbinenschaufel berücksichtigt und kann auch durch gezielte Nachbearbeitung erreicht werden.

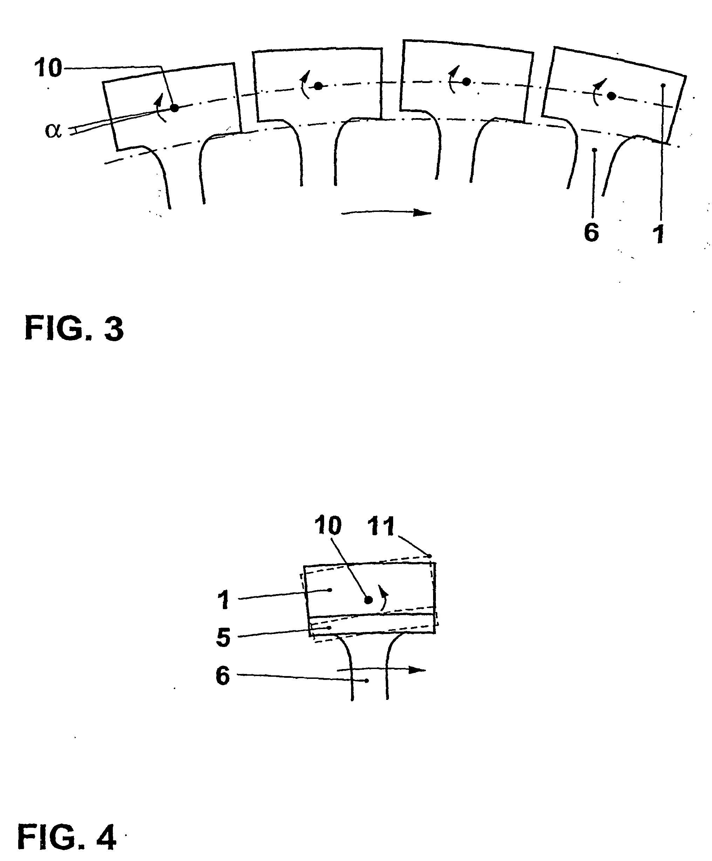

Figur 3 zeigt eine vorteilhafte Ausführungsform, bei der sich die bei einer Ausgestaltung der schneidenförmigen Elemente gemäß Figur 2 ergebende erhöhte Leckage zwischen dem Deckband 5 und der gegenüberliegenden Gehäusewandung 3 vermieden wird. Bei dieser Ausführungsform ist die Schneidengeometrie genau so gewählt, wie sie bereits im Zusammenhang mit Figur 2 erläutert wurde. Durch geeignete Berücksichtigung der bei der Rotation auftretenden thermischen Deformationen oder durch gezielte nicht ausbalancierte Anordnung der Deckbänder 5 an der Schaufel 6 kann erreicht werden, dass sich der durch die Schräge entstehende keilförmige Spalt zwischen der Gegenlauffläche 2 und dem schneidenförmigen Element 1 - in Figur 2a durch den schraffierten Bereich angedeutet - nach Durchfahren eines kritischen Drehzahlbereiches oder Temperaturbereiches aufgrund der angreifenden Kräfte bzw. thermischen Deformation schließt. Dieser Mechanismus ist in Figur 3 durch die Pfeile an den Schneiden 1 schematisch angedeutet, die eine Drehung oder Biegung des Deckbandes 5 um die Aufhängungs- bzw. Verbindungsmittelachse 10 der Verbindung mit den Laufschaufeln 6 während der Rotation zeigen. Diese Biegung, die wie bereits oben erwähnt auch thermisch herbeigeführt werden kann, führt zum Schließen des keilförmigen Spaltes mit dem Freiformwinkel α, wobei die Figur bereits den Zustand nach Schließen des Spaltes zeigt.

Figur 4 zeigt eine Ausführungsform, bei der das schneidenförmige Element 1 im Ruhezustand der Gasturbine kein spanabhebendes Mittel mit geometrisch bestimmter Schneide ausbildet, sondern ausgeformt ist, wie dies bei den bekannten Anordnungen des Standes der Technik bekannt ist. Durch geeignete Anbringung dieses schneidenförmigen Elementes 1 bzw. des Deckbandes 5 mit diesem schneidenförmigen Element an der Laufschaufel 6 kann erreicht werden, dass sich der in Umlaufrichtung vordere Teil des schneidenförmigen Elementes 1 bei Rotation der Laufschaufel 6 in radialer Richtung bewegt, so dass er mit der dadurch aufragenden Schneidecke 11 die spanabhebende Wirkung erzielt. Bei dieser Ausgestaltung wird das Deckband 5 nicht ausbalanciert, sondern dessen Schwerpunkt in Umlaufrichtung vor der Längsachse der Laufschaufel 6 gelegt.

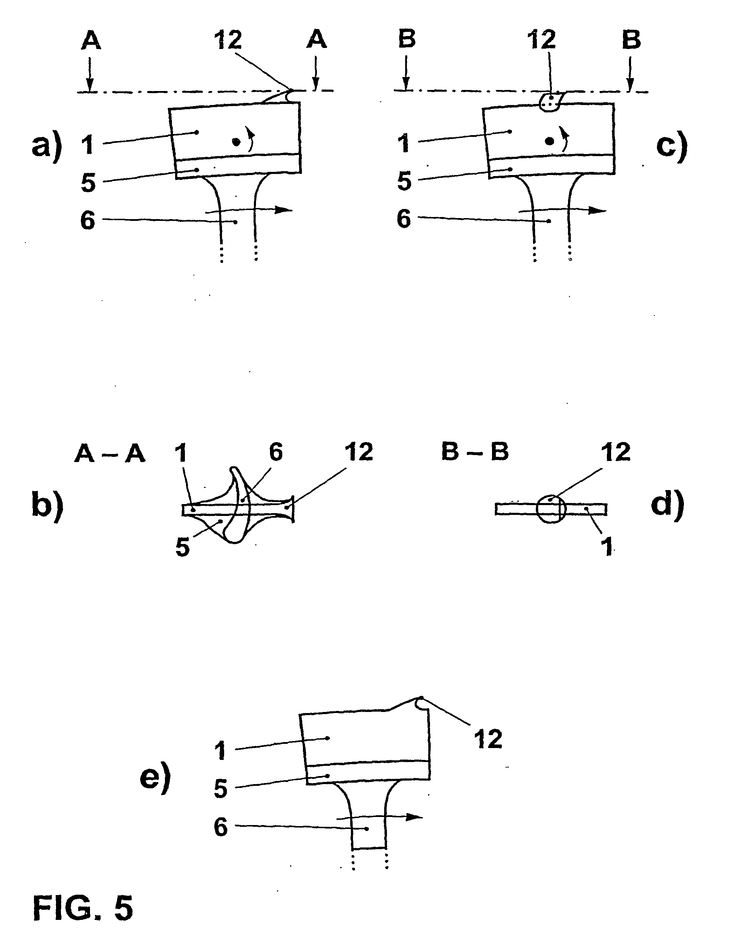

Figur 5 zeigt drei Beispiele, bei denen das schneidenförmige Element 1 mit einem gesonderten Schneidzahn 12 versehen ist. In den Figuren 5a und 5b ist hierbei in Seitenansicht und in Draufsicht ein Schneidzahn 12 zu erkennen, der sich in geeigneter Weise von der Fläche des schneidenförmigen Elementes abhebt. Neben dieser Anbringung des Schneidezahns 12 im in Umlaufrichtung vorderen Bereich des schneidenförmigen Elementes 1 kann dieser, wie in den Figuren 5c und 5d in Seitenansicht und in Draufsicht gezeigt ist, auch beispielsweise mittig aufgesetzt werden.
Figur 5e zeigt eine weitere Ausgestaltung, bei der der Schneidezahn 12 im vorderen Teil des schneidenförmigen Elementes 1 integriert ist.
Die geometrische Ausgestaltung dieses Schneidezahns 12 muss selbstverständlich dergestalt erfolgen, dass die spanabhebende Wirkung gegenüber der Gegenlauffläche 2 zumindest während eines Geschwindigkeitsbereiches der Rotation erfüllt wird. Geeignete geometrische Formen sind aus der Werkzeugtechnik bekannt. Weiterhin ist es möglich, mehrere dieser Schneidzähne 12 an einem schneidenförmigen Element 1 anzubringen.

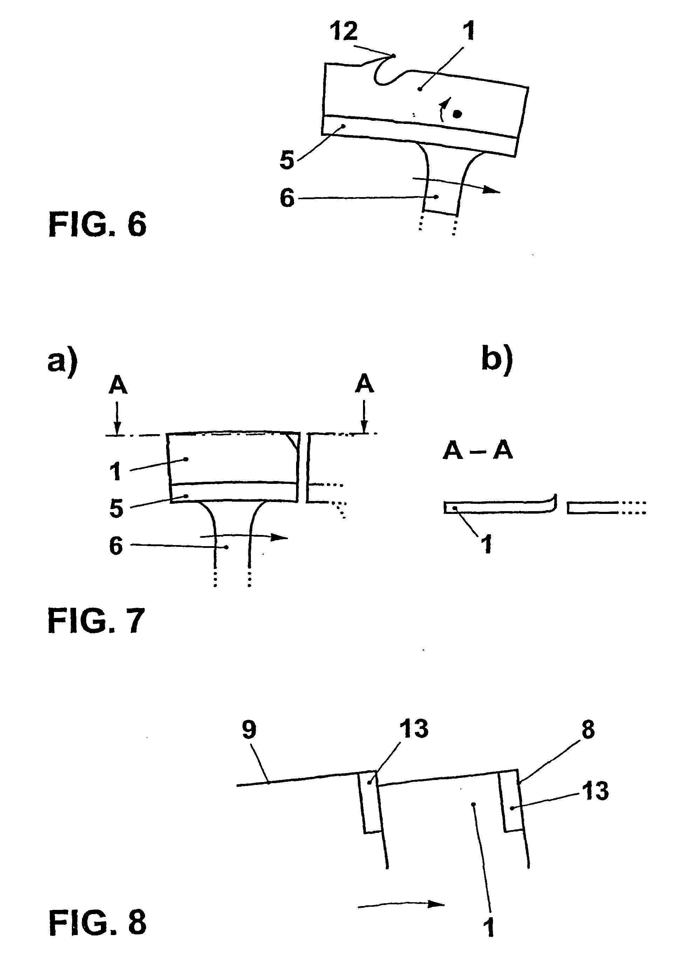

Figur 6 zeigt ein weiteres Beispiel, bei dem ein gesonderter Schneidezahn 12 im oberen Bereich des schneidenförmigen Elementes 1 ausgebildet ist. Bei dieser Ausgestaltung wird zusätzlich das Deckband 5 nicht ausbalanciert, wobei dessen Schwerpunkt in Umlaufrichtung gegenüber der Befestigungsmittelachse an der Laufschaufel 6 nach hinten verschoben ist. Durch diese Ausgestaltung bewegt sich der hintere Teil des schneidenförmigen Elementes 1 während der Rotation gegen die Gegenlauffläche, um so die spanabhebende Wirkung zu verstärken.

Figur 7 zeigt eine weitere Ausgestaltung des schneidenförmigen Elementes einer erfindungsgemäßen Dichtungsanordnung in Seitenansicht und in Draufsicht. Bei dieser Ausgestaltung ist die in Umlaufrichtung vordere Ecke des schneidenförmigen Elementes seitlich angeschärft oder ausgebogen, wie dies in Draufsicht gut zu erkennen ist. Durch dieses seitliche Anschärfen oder Ausbiegen wird die gewünschte spanabhebende Funktion gegenüber der Gegenlauffläche bewirkt.

Figur 8 zeigt ein Beispiel einer Ausbildung des schneidenförmigen Elementes, bei der die Spanfläche 8 gegenüber dem restlichen Bereich gehärtet ist. Der gehärtete Bereich ist mit Bezugszeichen 13 angedeutet. Durch dieses partielle Härten der Schneide wird ein automatisches Nachschärfen durch Abnutzung der Freifläche 9 erzielt.

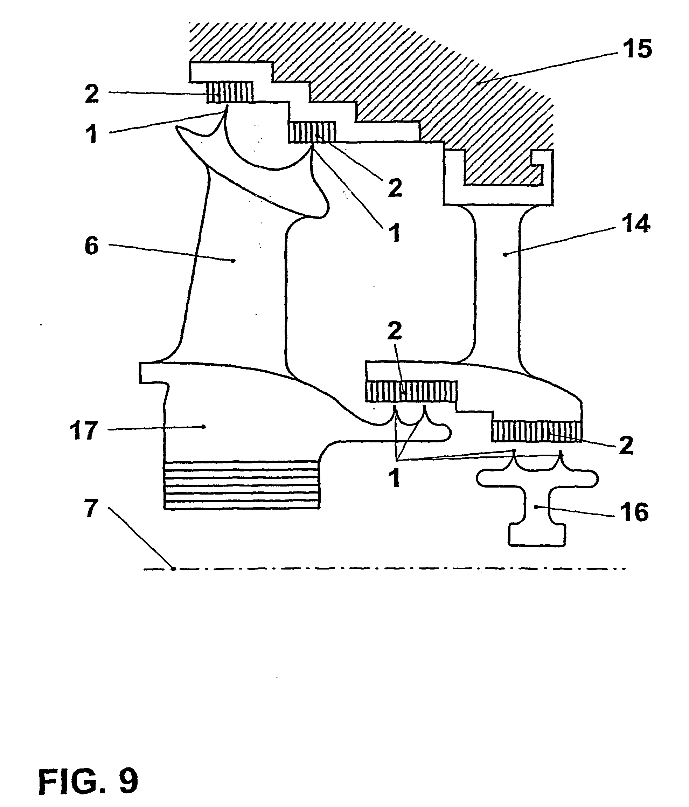

Figur 9 zeigt schließlich schematisch unterschiedliche Bereiche einer Gasturbine, in denen die vorliegende Dichtungsanordnung eingesetzt werden kann. So sind in der Figur die Rotationsachse 7, eine Laufschaufel 6, eine Leitschaufel 14, das umgebende Gehäuse 15 sowie das Rotorwärmestausegment (RWSS) 16 dargestellt. Zur Vermeidung von Leckströmen in axialer Richtung ist das Deckband der Laufschaufel 6 mit zwei schneidenförmigen Elementen 1 ausgebildet, die in entsprechende Gegenlaufflächen 2 am Gehäuse 15 eingreifen (hier aus Übersichtlichkeitsgründen nicht dargestellt). Diese Dichtungsanordnung am Schaufeldeckband kann mit den erfindungsgemäß vorgeschlagenen Schneiden realisiert werden.
Eine weitere Dichtung zwischen dem Schaufelfuß 17 der Laufschaufel und der benachbarten Leitschaufel 14 bei balkonartiger Ausführung des Schaufelfußes 17 ist ebenfalls ein Anwendungsbeispiel für die vorliegende Dichtungsanordnung. In diesem Fall sind die beiden schneidenförmigen Elemente 1 am Schaufelfuß 17 gegenüber der an der Leitschaufel 14 ausgebildeten Gegenlauffläche 2 entsprechend geformt, um die beschriebene spanabhebende Funktion zu erzielen.
Ein weiteres Anwendungsbeispiel für die vorliegende Dichtungsanordnung liegt in der Abdichtung zwischen dem Wärmestausegment 16 des Rotors und den statischen Leitschaufeln 14. Auch in diesem Fall sind die am Wärmestausegment 16 ausgebildeten schneidenförmigen Elemente 1 gemäß der vorliegenden Erfindung ausgebildet.

Es versteht sich von selbst, dass die in diesem Ausführungsbeispiel sowie in den vorangehenden Ausführungsbeispielen dargestellte Anzahl der schneidenförmigen Elemente, die nebeneinander in die Gegenlaufflächen eingreifen, nicht auf die jeweils dargestellte Anzahl beschränkt sind. Die Anzahl dieser schneidenförmigen Elemente spielt bei der Realisierung der vorliegenden Erfindung keine Rolle.
In gleicher Weise ist es unerheblich, ob jeweils nur das schneidenförmige Element einer Laufschaufel bzw. eines Deckbandes oder Schaufelfußes die spanabhebende Funktion erfüllt, oder ob diese Funktion bei mehreren oder allen Laufschaufeln einer Laufschaufelreihe erfüllt wird.

### Bezugszeichenliste

- 1: schneidenförmiges Element
- 2: Gegenlauffläche
- 3: statische Baugruppe
- 4: rotierende Baugruppe
- 5: Deckband
- 6: Laufschaufel
- 7: Rotationsachse
- 8: Spanfläche
- 9: Freifläche
- 10: Aufhängungsmittelachse
- 11: Schneidecke
- 12: Schneidzahn
- 13: gehärteter Bereich
- 14: Leitschaufel
- 15: Gehäusewand
- 16: Rotor-Wärmestausegment
- 17: Schaufelfuß
- α: Freiformwinkel

## Patentansprüche

1. Laufschaufel einer Strömungsmaschine, mit einer Einbau-Umfangsrichtung, einer Einbau-Radialrichtung, und einer Einbau-Rotationsrichtung, welche Laufschaufel ein spanabhebendes Mittel umfasst, welches spanabhebende Mittel ein spannabhebendes Element aufweist: welches spanabhebende Element umfasst: eine geometrisch bestimmte Schneide, eine Spanfläche (8) und eine Freiformfläche (9), wobei die Freiformfläche mit einem Freiformwinkel (α) gegen die Einbau-Umfangsrichtung geneigt ist, **dadurch gekennzeichnet, dass** die Laufschaufel ein Deckband (5) aufweist, auf welchem ein schneidenförmiges Element (1) angeordnet ist, welches als das spanabhebende Mittel ausgebildet ist, wobei das Deckband (5) derart gezielt unbalanciert auf der Laufschaufel (6) befestigt ist dass das Deckband unter dem Einfluss einer bei Rotation eines Rotors, auf welchem die Laufschaufel befestigbar ist, angreifenden Fliehkraft, oder einer thermischen Deformation eine Kippbewegung ausführt, aufgrund welcher Kippbewegung der Freiformwinkel geändert wird.

2. Laufschaufel nach Anspruch 1,
**dadurch gekennzeichnet,**
**dass** das Deckband derart unbalanciert angeordnet ist, dass ein in Einbau-Rotationsrichtung vorwärtsweisender Abschnitt im Betrieb in der Einbau-Radialrichtung nach aussen gebogen wird, und derart der Freiformwinkel vergrössert wird.

3. Laufschaufel nach Anspruch 2, **dadurch gekennzeichnet, dass** der Freiformwinkel im statischen Zustand im Wesentlichen Null entspricht.

4. Laufschaufel nach Anspruch 1,
**dadurch gekennzeichnet,**
**dass** das Deckband derart unbalanciert angeordnet ist, dass ein in Einbau-Rotationsrichtung rückwärtsweisender Abschnitt im Betrieb in der Einbau-Radialrichtung nach aussen gebogen wird, und derart der Freiformwinkel verkleinert wird.

5. Laufschaufel gemäss Anspruch 4, **dadurch gekennzeichnet, dass** das Deckband in der Einbau-Rotationsrichtung vor seinem Massenschwerpunkt an der Schaufel befestigt ist.

6. Laufschaufel gemäss einem der Ansprüche 4 oder 5, **dadurch gekennzeichnet, dass** die Anordnung derart unbalanciert ist, dass der Freiformwinkel oberhalb einer bestimmten Temperatur und Drehzahl verschwindet.

7. Laufschaufel gemäss einem der vorstehenden Ansprüche, **dadurch gekennzeichnet, dass** das schneidenförmige Element (1) eine Spanfläche (8) und eine Freiformfläche (9)aufweist und derart das spanabhebende Element ausbildet.

8. Laufschaufel gemäss einem der Ansprüche 1 bis 6, **dadurch gekennzeichnet, dass** auf dem schneidenförmigen Element (1) wenigstens ein Schneidzahn (12) als spanabhebendes Element angeordnet ist.

9. Laufschaufel gemäss einem der vorstehenden Ansprüche, **dadurch gekennzeichnet, dass** das schneidenförmige Element ein auf dem Deckband angeordneter Dichtstreifen zur Ausbildung einer Dichtung im Einbauzustand mit einem gegenüberliegenden feststehenden Bauteil (3) ist.

10. Strömungsmaschinenrotor, umfassend wenigstens eine Laufreihe (4) mit wenigstens einer Laufschaufel (6) gemäss einem der vorstehenden Ansprüche.

11. Strömungsmaschine, umfassend einen Rotor gemäss Anspruch 10.

12. Dichtungsanordnung, umfassend eine Laufschaufel (6) gemäss einem der Ansprüche 1 bis 9, sowie eine statische Baugruppe (3), wobei die statische Baugruppe eine Gegenlauffläche (2) aufweist, welche in Einbau-Radialrichtung dem Deckband (5) gegenüberliegt.

13. Dichtungsanordnung gemäss Anspruch 12, **dadurch gekennzeichnet, dass** ein schneidenförmiges Element (1) als Dichtstreifen zwischen dem Deckband (5) und der Gegenlauffläche (2) angeordnet ist und somit eine Labyrinthdichtung mit der Gegenlauffläche ausbildet.

14. Dichtungsanordnung gemäss einem der Ansprüche 12 oder 13, **dadurch gekennzeichnet, dass** die Gegenlauffläche (2) als Wabendichtung, Filz, oder poröses Material ausgeführt ist.

15. Dichtungsanordnung gemäss einem der Ansprüche 12 bis 14, **dadurch gekennzeichnet, dass** die statische Baugruppe ein Gehäuse einer Gasturbine umfasst.

16. Dichtungsanordnung gemäss einem der Ansprüche 12 bis 15 zur Abdichtung zwischen einer Laufschaufelreihe und einer Gehäusewand (15) einer Strömungsmaschine.

## Claims

1. Rotor blade of a turbomachine, having an installation circumferential direction, an installation radial direction and an installation direction of rotation, which rotor blade comprises a material-removing means, which material-removing means has a material-removing element: which material-removing element comprises: a geometrically defined cutting edge, a tool face (8) and a free face (9), the free face being inclined at a freeform angle (α) with respect to the installation circumferential direction, **characterized in that** the rotor blade has a cover strip (5), on which a cutting-edge shaped element (1), which is designed as the material-removing means, is arranged, the cover strip (5) deliberately being secured in an unbalanced way on the rotor blade (6), in such a manner that the cover strip executes a tilting movement under the influence of a centrifugal force, which is active during rotation of a rotor to which the rotor blade can be secured, or of a thermal deformation, as a result of which tilting movement the freeform angle is changed.

2. Rotor blade according to Claim 1, **characterized in that** the cover strip is arranged in an unbalanced way, in such a manner that a section which faces forwards in the installation direction of rotation, in operation, is bent outwards in the installation radial direction, and in this way the freeform angle is increased.

3. Rotor blade according to Claim 2, **characterized in that** in the static state the freeform angle substantially corresponds to zero.

4. Rotor blade according to Claim 1, **characterized in that** the cover strip is arranged in unbalanced fashion, in such a manner that a section which faces backwards in the installation direction of rotation, in operation, is bent outwards in the installation radial direction, and in this way the freeform angle is reduced.

5. Rotor blade according to Claim 4, **characterized in that** the cover strip, as seen in the installation direction of rotation, is secured to the blade in front of its centre of gravity.

6. Rotor blade according to one of Claims 4 and 5, **characterized in that** the arrangement is unbalanced in such a manner that the freeform angle disappears above a certain temperature and rotational speed.

7. Rotor blade according to one of the preceding claims, **characterized in that** the cutting-edge-shaped element (1) has a tool face (8) and a free face (9), and in this way forms the material-removing element.

8. Rotor blade according to one of Claims 1 to 6, **characterized in that** at least one cutting tooth (12) is arranged as material-removing element on the cutting-edge-shaped element (1).

9. Rotor blade according to one of the preceding claims, **characterized in that** the cutting-edge-shaped element is a sealing strip arranged on the cover strip for forming a seal, in the installed position, with an opposite, stationary component (3).

10. Turbomachine rotor, comprising at least one rotor row (4) having at least one rotor blade (6) according to one of the preceding claims.

11. Turbomachine, comprising a rotor according to Claim 10.

12. Seal arrangement, comprising a rotor blade (6) according to one of Claims 1 to 9, as well as a static assembly (3), the static assembly having a mating running surface (2) which lies opposite the cover strip (5) in the installation radial direction.

13. Seal arrangement according to Claim 12, **characterized in that** a cutting-edge-shaped element (1) is arranged as a sealing strip between the cover strip (5) and the mating running surface (2), and thereby forms a labyrinth seal with the mating running surface.

14. Seal arrangement according to one of Claims 12 or 13, **characterized in that** the mating running surface (2) is designed as a honeycomb seal, felt or porous material.

15. Seal arrangement according to one of Claims 12 to 14, **characterized in that** the static assembly comprises a housing of a gas turbine.

16. Seal arrangement according to one of Claims 12 to 15 for forming a seal between a row of rotor blades and a housing wall (15) of a turbomachine.

## Revendications

1. Aube mobile d'une turbomachine, avec un sens périphérique de montage, un sens radial de montage et un sens de rotation de montage, laquelle aube mobile comprend un moyen d'enlèvement de copeaux, lequel moyen d'enlèvement de copeaux présente un élément d'enlèvement de copeaux, lequel élément d'enlèvement de copeaux comprend : un taillant à géométrie définie, une face d'attaque (8) et une face de dépouille (9), dans laquelle la face de dépouille est inclinée à un angle de dépouille (α) en sens inverse au sens périphérique de montage, **caractérisée en ce que** l'aube mobile présente une bande de recouvrement (5) sur laquelle est disposé un élément en forme de taillant (1) qui est configuré comme le moyen d'enlèvement de copeaux, la bande de recouvrement (5) étant fixée de manière précisément déséquilibrée sur l'aube mobile (6) de telle sorte que la bande de recouvrement exécute, sous l'influence d'une force centrifuge intervenant lors de la rotation d'un rotor sur lequel l'aube mobile peut être fixée ou d'une déformation thermique, un mouvement basculant en raison duquel mouvement basculant l'angle de dépouille est modifié.

2. Aube mobile selon la revendication 1, **caractérisée en ce que** la bande de recouvrement est disposée de manière déséquilibrée de telle sorte qu'une section orientée vers l'avant dans le sens de rotation de montage soit fléchie vers l'extérieur dans le sens radial de montage lors du fonctionnement et de telle sorte que l'angle de dépouille soit agrandi.

3. Aube mobile selon la revendication 2, **caractérisée en ce que** l'angle de dépouille correspond essentiellement à zéro à l'état statique.

4. Aube mobile selon la revendication 1, **caractérisée en ce que** la bande de recouvrement est disposée de manière déséquilibrée de telle sorte qu'une section orientée vers l'arrière dans le sens de rotation de montage soit fléchie vers l'extérieur dans le sens radial de montage lors du fonctionnement et de telle sorte que l'angle de dépouille soit réduit.

5. Aube mobile selon la revendication 4, **caractérisée en ce que** la bande de recouvrement dans le sens de rotation de montage est fixée sur l'aube avant son point de gravité massique dans le sens de rotation de montage.

6. Aube mobile selon une des revendications 4 ou 5, **caractérisée en ce que** le système est déséquilibré de telle sorte que l'angle de dépouille disparaisse au-dessus d'une température et d'une vitesse de rotation déterminée.

7. Aube mobile selon une des revendications précédentes, **caractérisée en ce que** l'élément en forme de taillant (1) présente une face d'attaque (8) et une face de dépouille (9) et forme ainsi l'élément d'enlèvement de copeaux.

8. Aube mobile selon une des revendications 1 à 6, **caractérisée en ce qu'**au moins une dent coupante (12) est disposée comme élément d'enlèvement de copeaux sur l'élément en forme de taillant (1).

9. Aube mobile selon une des revendications précédentes, **caractérisée en ce que** l'élément en forme de taillant (1) est un ruban d'étanchéité disposé sur la bande de recouvrement pour former une garniture d'étanchéité à l'état monté avec un composant (3) fixe opposé.

10. Rotor de turbomachine comprenant au moins une rangée mobile (4) avec au moins une aube mobile (6) selon une des revendications précédentes.

11. Turbomachine comprenant un rotor selon la revendication 10.

12. Système de garniture d'étanchéité comprenant une aube mobile (6) selon une des revendications 1 à 9 ainsi qu'un ensemble statique (3), dans lequel l'ensemble statique présente une contre-surface (2) qui est opposée à la bande de recouvrement (5) dans le sens radial de montage.

13. Système de garniture d'étanchéité selon la revendication 12, **caractérisé en ce qu'**un élément en forme de taillant (1) est disposé comme ruban d'étanchéité entre la bande de recouvrement (5) et la contre-surface (2) et forme ainsi une garniture d'étanchéité à labyrinthe avec la contre-surface.

14. Système de garniture d'étanchéité selon une des revendications 12 ou 13, **caractérisé en ce que** la contre-surface (2) est réalisée comme garniture d'étanchéité en nid d'abeilles, feutre ou matériau poreux.

15. Système de garniture d'étanchéité selon une des revendications 12 à 14, **caractérisé en, ce que** l'ensemble statique comprend un logement d'une turbine à gaz.

16. Système de garniture d'étanchéité selon une des revendications 12 à 15 pour l'étanchéité entre une rangée d'aubes mobiles et une paroi de logement (15) d'une turbomachine.
